Europäisches Patentamt

European Patent Office

Office européen des brevets

(19)

(11) **EP 0 514 214 B1**

(12) **EUROPEAN PATENT SPECIFICATION**

(45) Date of publication and mention
of the grant of the patent:
**23.04.1997 Bulletin 1997/17**

(51) Int Cl.⁶: **H04N 5/92**

(21) Application number: **92304442.4**

(22) Date of filing: **15.05.1992**

(54) **Apparatus for reproducing image information having superimposition**

Gerät zur Wiedergabe von Bildinformation mit Überlagerung

Dispositif pour reproduire une information d'image avec superposition

(84) Designated Contracting States:
**DE FR GB**

(30) Priority: **15.05.1991 JP 110619/91**

(43) Date of publication of application:
**19.11.1992 Bulletin 1992/47**

(73) Proprietor: **PIONEER ELECTRONIC
CORPORATION
Meguro-ku Tokyo-to (JP)**

(72) Inventors:
• **Nakamaru, Noboru, c/o Pioneer Electronic Corp.
Ohta-ku, Tokyo-to (JP)**
• **Suzuki, Shinji, c/o Pioneer Electronic Corp.
Ohta-ku, Tokyo-to (JP)**

• **Katsu, Toshiyuki, c/o Pioneer Electronic Corp.
Ohta-ku, Tokyo-to (JP)**
• **Kikuchi, Akira, c/o Pioneer Electronic Corp.
Ohta-ku, Tokyo-to (JP)**
• **Iizuka, Tatsushi, c/o Pioneer Electronic Corp.
Ohta-ku, Tokyo-to (JP)**
• **Sakamoto, Masaharu,
c/o Pioneer Electronic Corp.
Ohta-ku, Tokyo-to (JP)**

(74) Representative: **Brunner, Michael John
GILL JENNINGS & EVERY
Broadgate House
7 Eldon Street
London EC2M 7LH (GB)**

(56) References cited:
**EP-A- 0 380 746          EP-A- 0 389 689**

## Description

This invention relates to an apparatus for reproducing recorded information, and more particularly to a recorded information reproducing apparatus for reproducing video information and superimposition information recorded on an information recording medium, e.g., , CDV (Compact Disk Video), LD (Laser Disk), or DAT (Digital Audio Tape), etc..

As a conventional system for displaying a character on an image reproduced from a CDV or an LD on which video information is recorded, there are known a superimposed dialogue system of recording character information together with image information in advance, and a superimpose system of later superimposing character information generated from a character generator on a predetermined portion of an image.

However, in the case of using a conventional character display system, it is sometimes difficult for aged people or people having a weak eyesight to read the characters, because the size of them is small. In such cases, the conventional superimposed dialogue system cannot process or modify character information reproduced on an image to be easy to see. In the conventional superimpose system, it is not taken any specific measure to make characters be easy to see.

EP-A-0389689 discloses a reproducing apparatus which displays characters generated from sub-code information.

An object of this invention is to provide an apparatus for reproducing recorded information, which is capable of modifying position and/or size, etc. of characters, symbols, or graphics reproduced on the display so as to make them easy to see for a user.

According to one aspect of this invention, there is provided an apparatus for reproducing a video image including superimposition from an information recording medium on which encoded video information and subcode information having sub-coded superimposition information are recorded, said apparatus comprising:

video information reproducing means for decoding said video information to output a video signal; and
subcode information reproducing means for decoding said subcode information to output a superimposition signal; characterised by:
control means for modifying the format of said superimposition signal to be superimposed on said video signal.

According to a second aspect there is provided an apparatus (100A) for reproducing a video image from an information recording medium on which an audio signal, a video signal and subcode information is recorded, said apparatus comprising:

a subcode decoder for decoding said subcode information used for superimposition;
a character generator for generating character information from said subcode information;
a video signal processor for superimposing said modified character information on said video signal; and
a display for displaying said video signal with the superimposed character information; characterised in that:
the character generator is arranged to modify the format of said character information in accordance with a modification command.

In accordance with the recorded information reproducing apparatus thus constructed, it is possible to modify a format of a superimposition signal, e.g., characters, symbols or graphics, etc.. That is, a character size or a character superimposing position, etc. are modified and superimposed on an video signal to be displayed. Thus, such characters displayed are extremely easy to see for a user, especially for aged people or people having a weak eyesight.

In the accompanying drawings:-

FIG. 1 is an explanatory view showing the principle of the present invention.

FIG. 2 is a block diagram showing an embodiment according to the present invention.

FIG. 3 is a perspective view showing a display/operation unit shown in FIG. 2.

FIG. 4 is a view for explaining the operation of the present invention.

FIG. 5 is another view for explaining the operation of the present invention.

FIG. 6 is a view showing a modification of characters according to the present invention.

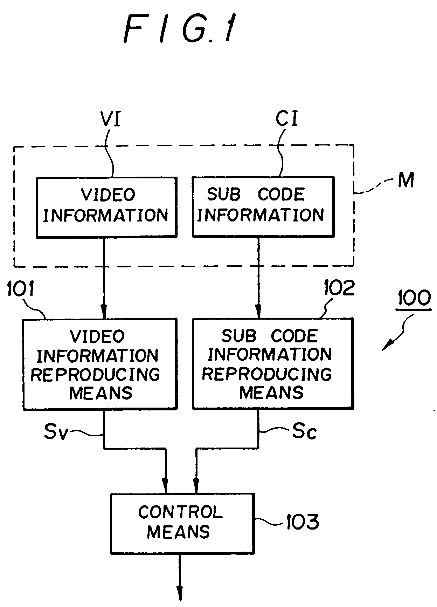

A preferred embodiment of this invention will now be described in detail with reference to FIGS. 1 to 4.

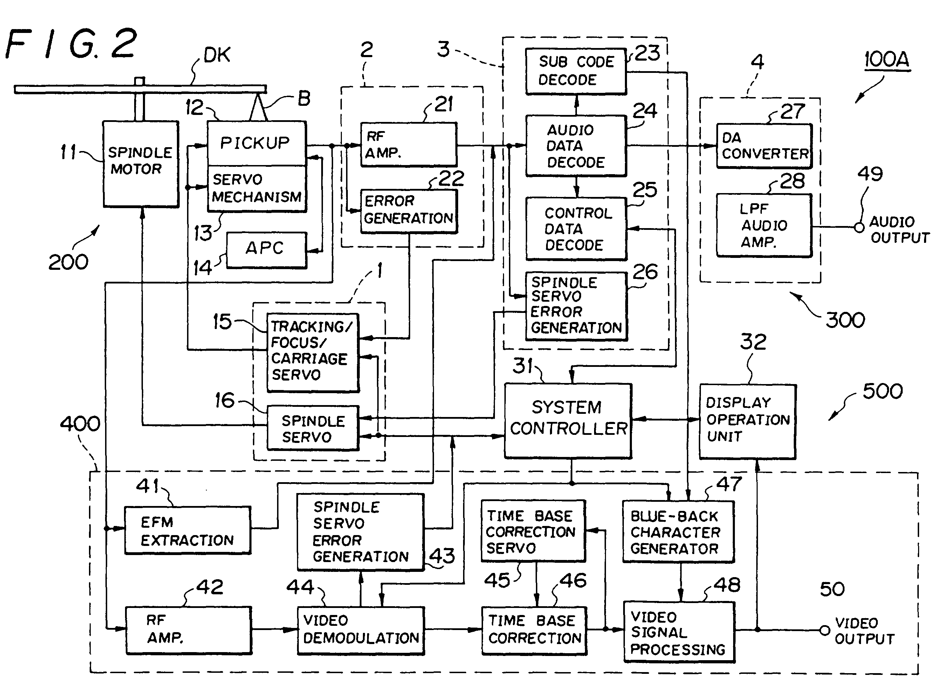

FIG. 1 shows a principle of the present invention and FIG. 2 shows a detailed configuration of a CDV player according to the present invention. In FIG. 2, the CDV player 100A roughly comprises an information reading system 200, an audio reproducing system 300, a video reproducing system 400, and a control system 500. More particularly, the information reading system 200 comprises spindle motor 11 for rotationally driving a CDV disk DK, a pickup 12 for reading information from the CDV disk DK, a servo mechanism 13 for driving the pickup 12, an APC (Automatic Power Control) circuit 14, and a servo unit 1. The servo unit 1 comprises a tracking/focus/carriage servo circuit 15 for carrying out a servo control of the pickup 12 and the servo mechanism 13, and a spindle servo circuit 16 for carrying out a servo control of the spindle motor 11.

The audio reproducing system 300 comprises a preamplifier section 2, a decoder section 3, and a DA converter section 4. The preamplifier section 2 comprises an RF amplifier 21, and an error generator 22. The decoder section 3 comprises a subcode decoder 23, an audio data decoder 24, a control data decoder 25, and a spindle servo error generator 26. The DA converter section 4 comprises a DA converter 27 and a LPF/audio amplifier 28. The control system 500 comprises a system controller 31 and a display/operation unit 32.

Further, the video reproducing system 400 comprises an EFM (Eight to Fourteen Modulation) extractor 41, an RF amplifier 42, a spindle servo error generator 43, a video demodulator 44, a time base correction servo section 45, a time base correction section 46, a blue-back/character generator 47, and a video signal processing section 48.

The operation of the CDV player 100A will now be described.

Initially, the CDV disk DK is rotationally driven by the spindle motor 11, and recorded information is read by irradiating a laser beam B from the pickup 12 and is then converted to an electrical signal. The pickup 12 is driven and controlled by the servo mechanism 13 under control of the servo unit 1. As a light source for irradiating a light beam on a disk, a semiconductor laser is generally used.

However, the intensity of the output light beam changes in correspondence with the change in temperature or passage of time even when a current input to the semiconductor laser is kept constant, resulting in the change of the electrical signal obtained from the disk. Accordingly, the APC circuit 14 is provided to control the output laser light to be a constant intensity for a long time, even if the temperature changes.

The electrical signal read by the pickup 12 is sent to the RF amplifier 21 and the error generator 22. An output from the RF amplifier 21 is further sent to the audio data decoder 24 and the spindle servo error generator 26. At the audio data decoder 24, the audio signal is decoded and sent to the DA converter 27. The output signal from the audio data decoder 24 is also sent to the subcode decoder 23, and the control data decoder 25. The DA converter 27 converts the decoded digital audio signal to a corresponding analog signal to send it to the LPF/audio amplifier 28. At the LPF/ audio amplifier 28, a predetermined frequency band of the converted analog signal is extracted at the low pass filter (LPF), and then the output level thereof is adjusted. The signal thus processed is output from the audio output terminal 49 as an audio output signal. When an external amplifier or an external speaker (not shown) are connected to the audio output terminal 49, the audio output signal can be output as sound or voice.

On the other hand, the error generator 22 generates and delivers a tracking error signal, a focusing error signal, and a carriage error signal to the tracking/focus/carriage servo circuit 15 to perform the servo controls on the basis of the error signals. The tracking/focus/carriage servo circuit 15 generates a signal for driving the pickup 12 or the servo mechanism 13 on the basis of these error signals and outputs it to the pickup 12 or the servo mechanism 13. Further, the spindle servo error generator 26 generates an error signal for a spindle servo control from the signal input from the RF amplifier 21 and outputs it to the spindle servo circuit 16. The spindle servo circuit 16 generates a signal for driving the spindle motor 11 on the basis of this error signal and outputs it to the spindle motor 11.

Further, the subcode decoder 23 decodes and extracts a subcode signal from the signal sent from the audio data decoder 24 and sends it to the blue back/character generator 47. In the subcode signal, superimposition signals such as characters, symbols or graphics, etc. to be superimposed on a reproduced video image are included. The blue back character generator 47 extracts the character signals to output them to the video signal processing section 48.

An output of the pickup 12 is also sent to the EFM extraction section 41 and the RF amplifier 42. At the EFM extraction section 41, the signal is subjected to EFM demodulation. The signal thus demodulated is fed back to the output side of the RF amplifier 21. Further, a signal whose level is adjusted at the RF amplifier 42 is sent to the video demodulation section 44, at which the video signal is demodulated. The signal thus demodulated is sent to the spindle servo error generator 43 and the time base correcting section 46. The spindle servo error generator 43 outputs an error signal to the spindle servo circuit 16 to carry out a spindle servo control. The video signal sent to the time base correcting section 46 is subjected to time base servo correction by the time base correction servo section 45 and the time base correcting section 46, and is then output to the video signal processing section 48. The video signal processing section 48 is supplied with a superimposition signal (characters, etc.) to be superimposed from the blue back character generator 47. Thus, the superimposition signal is superimposed on the video signal, and the signal thus superimposed is output from a video output terminal 50.

It is possible to operate the CDV player 100A from the external by using the display/operation unit 32. An input operation command is sent to the system controller 31. The input operation command includes commands for modifying a format of superimposing the characters, symbols and graphics on the video signal. The system controller 31 outputs, on the basis of the input command, a control signal to the control data decoder 25, the tracking/focus/carriage servo circuit 15, the spindle servo circuit 16, the video demodulating section 44, and the blue back character generator 47 to control them. The control data decoder 25 decodes control data from the decoded signal sent from the audio data decoder 24 to send it to the system controller 31. Further, the tracking/focus/carriage servo circuit 15 and the spindle servo circuit 16 also send servo information to the system controller 31. When a modification command to double the size of a character of lyrics for musical accompaniment is input from the display/operation unit 32, the command is sent from the display/operation unit 32 to the blue back character generator 47 to modify a superimposition signal (characters, etc.) in the subcode signal to be double size. The modified double-sized character signal is sent from the blue back character generator 47 to the video signal processing section 48 to be superimposed on a background video signal. The video output signal thus produced is delivered to an image display device to be reproduced.

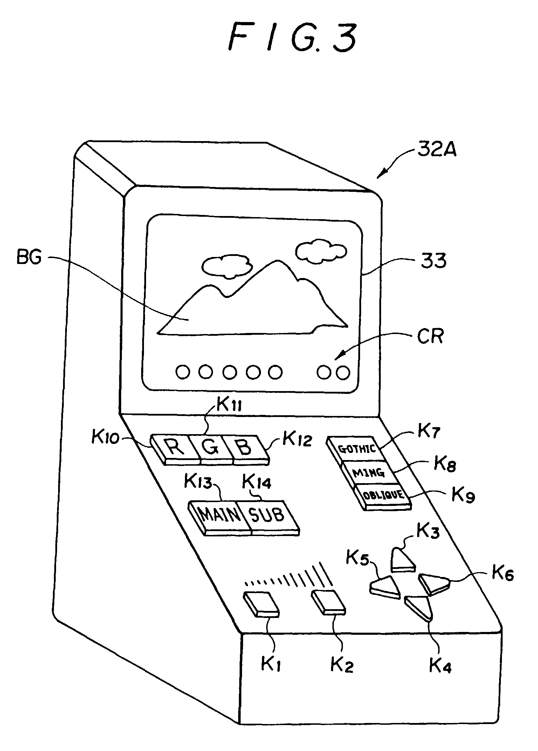

Next, the method of modifying the superimposition signal will now be described below. An example of the display/ operation unit 32 is shown FIG. 3. On the display/operation unit 32A, input keys K1 to K14 are provided. The input keys K1 and K2 are used for changing the size of a character, etc. to be superimposed. When an operator continues to depress the key K1, the size of a character becomes small. When an operator continues to depress the key K2, the size of the character becomes large. The keys K3 to K6 are used for changing the position of the superimposed character on a reproduced picture. The key K3 functions to move the entirety of the characters in an upper direction on the picture, the key K4 functions to move them in a lower direction, the key K5 functions to move them in a left direction, and the key K6 functions to move them in a right direction. The keys K7 to K9 are used for changing a character style or font wherein the key K7 serves to change the font to a Gothic type, the key K8 serves to change it to a Ming type, and the key K9 serves to change it to an italic type. The keys K10 to K12 are used for designation of color of a character wherein the key K10 serves to designate R (Red), the key K11 serves to designate G (green), and the key K12 serves to designate B (blue). When an operator continues to depress respective keys, an arbitrary color tone can be produced as a whole. In addition, the keys K13 and K14 are used for displaying two languages (bilingual display). The key K13 is a key for displaying a main language (e.g., Japanese), and the key K14 is a key for displaying a subsidiary language (e.g., English). When an operator depresses only the key K13, only Japanese is displayed. On the other hand, when an operator depresses only the key K14, only English is displayed. In addition, when an operator depresses both the keys K13 and K14, characters of the both languages are displayed. By utilizing the function, it is possible to display both lyrics and a musical score at the same time.

When an output of the video signal processing section 48 is delivered the display/operation unit 32, it is possible to display characters CR superimposed and a background picture BG on the image display section 33 of the display/ operation unit 32A.

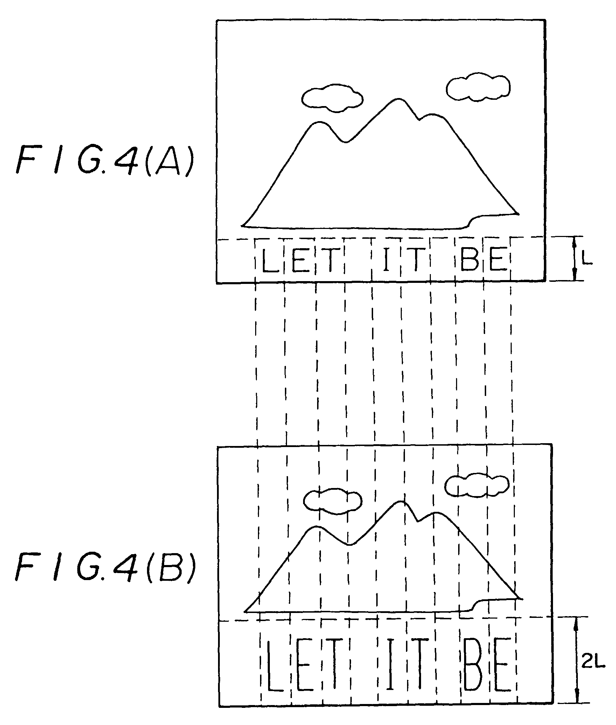

Next, a method and a principle of modifying a superimposition signal (character, etc.) will now be described. FIG. 4(A) shows an example of display of lyrics for musical accompaniment in a normal format. Respective characters have a height L on a displayed picture. In this case, by decoding subcode information to store data of one field and writing the same data twice for every horizontal synchronizing signal (Hsync), it is possible to display characters of double height (2L) as shown in FIG. 4(B). By utilizing this function, it is also possible to display characters having double height and width.

Another approach to double the character size will be described below. Initially, a reproduced picture is divided into $50 \times 18$ sections (fonts) and data of every respective sections are signified by a section position data and a color data. With respect to color information of respective sections, each section is further divided into $12 \times 6$ pixels and color information of every respective pixels are signified by a WRITE FONT information and an X-OR information. It is assumed that coordinates information $F(x, y)$ represents the x-th section position in a vertical direction and the y-th section position in a horizontal direction. Further, it is assumed that a color data of each pixel is represented by $P(\alpha, \beta)$. In this case, color data represented by $C(x, y, \alpha, \beta)$ designates a color data at the pixel of the $\alpha$-th vertical position and at the $\beta$-th horizontal position which is in the section of the x-th vertical position and the y-th horizontal position, and a color data of expanded (double height) character is represented by $C'(x, y, \alpha, \beta)$.

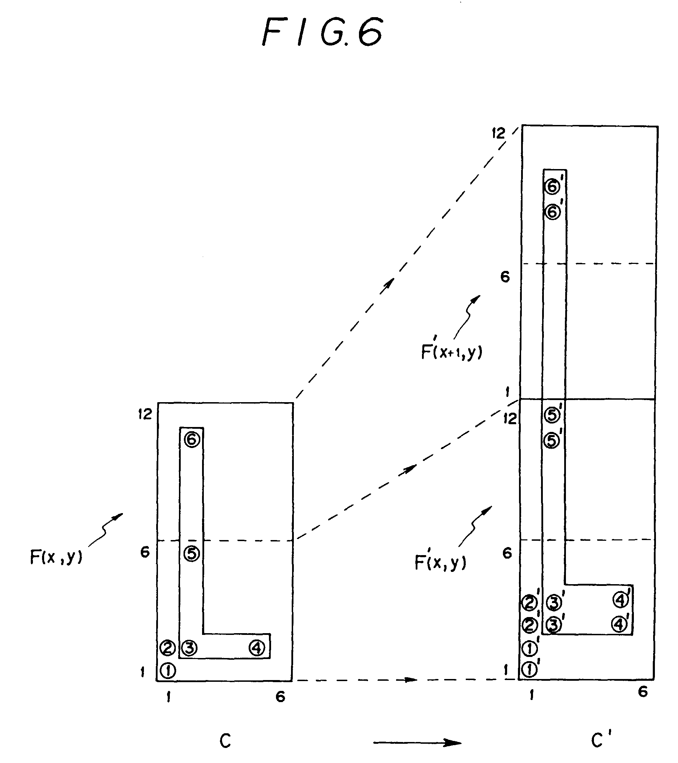

On the above premise, it is described below an operation to modify a character in a font $F(x, y)$ to be a double height character in fonts $F(x, y)$ and $F(x+1, y)$, with reference to FIG. 6.

In the case of $1 \leqq \alpha \leqq 6$, a color data of the double height character C' is determined as follows:

$$C'(x, y, 2\alpha-1, \beta)$$

$$= C'(x, y, 2\alpha, \beta) = C(x, y, \alpha, \beta) \tag{1}$$

In the case of $7 \leqq \alpha \leqq 12$, a color data of the double height character C' is determined as follows:

$$C'(x+1, y, 2(\alpha-6)-1, \beta)$$

$$= C'(x+1, y, 2(\alpha-6), \beta) = C(x, y, \alpha, \beta) \tag{2}$$

According to this operation, each respective color datas of the fonts $F'(x, y)$ and $F'(x+1, y)$ (1', 2', ⋯ 6', etc.) are determined in a manner as shown in FIG. 6. Therefore, the double height character can be produced. Further, other modifications such as producing a character having double width or having both double height and width can be carried out.

EP 0 514 214 B1

Further, as an application of this method, modifications such as changing a display position of characters, changing colors of characters, and changing a character style (font) can be realized.

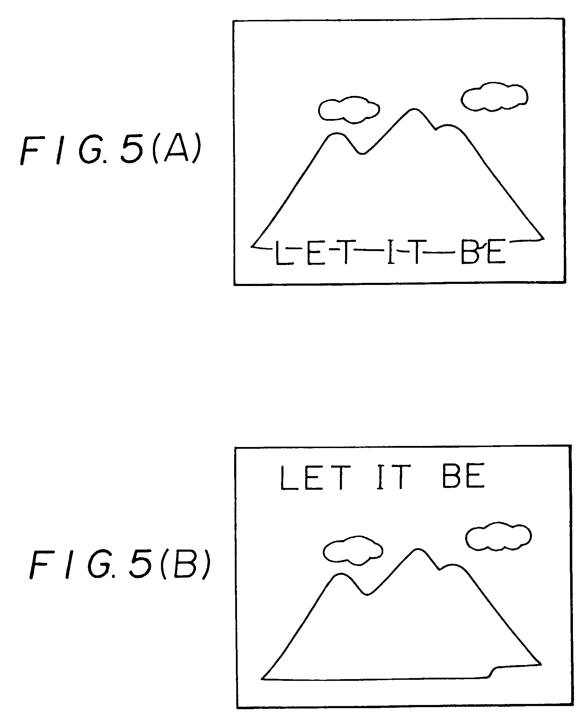

The modification of changing a display position of characters can be carried out as follows. When a character indicated by a font F (x, y) is moved 3 font in a vertical direction (x direction), the position of the moved character is determined as a font F' (x+3, y) and the color data thereof is determined as an operation of C' (x+3, y, $\alpha$, $\beta$) = C (x, y, $\alpha$, $\beta$). Performing this modification, characters become easy to see as shown in FIG. 5(B) without disturbance by the background image.

The modification of changing colors of characters can be carried out as follows. When a color data of a pixel in a font F (x, y) is represented by C (x, y, $\alpha$, $\beta$, c), the color of the pixel is changed by changing the componet C in the color data, i.e., changing the color data C (x, y, $\alpha$, $\beta$, c) to C' (x, y, $\alpha$, $\beta$, 3c), for example.

Further, when the character style of a character of font F (x, y) is represented by D (x, y, B), the change of character style can be carried out by changing a component B, i.e., changing the character style data D (x, y, B) to D' (x, y, B'), for example. In this case, the character style of displayed characters is modified by way of reading out a character style information, stored in the character generator 47, corresponding to the character style data B'.

Using this method, the character modification is advantageously carried out at a high speed and on a real time basis.

While the example of the CDV player has been described in the above-mentioned embodiment, this invention is applicable to an LD player. At present, FM modulated video information and voice information are generally recorded on LD. In future, however, there is a plan to digitize a voice portion and record a subcode signal. When this plan will be realized, this invention can be applied to LD player. Further, this invention is applicable to apparatuses in which an image can be displayed such as an OSD (On Screen Display) or a Videotex, etc., or magnetic recording/reproducing apparatuses such as a VTR (Video Tape Recorder) or a DAT (Digital Audio Taperecorder), etc..

As described above, the recorded information reproducing apparatus according to this invention can modify position and/or size, etc., of characters, symbols, or graphics so that they become easy to see for a user, especially for aged people or people having a weak eyesight.

## Claims

1. An apparatus (100A) for reproducing a video image including superimposition from an information recording medium on which encoded video information and subcode information having sub-coded superimposition information are recorded, said apparatus comprising:

   video information reproducing means (400) for decoding said video information to output a video signal; and subcode information reproducing means (23) for decoding said subcode information to output a superimposition signal; characterised by:
   control means (31) for modifying the format of said superimposition signal to be superimposed on said video signal.

2. An apparatus (100A) according to claim 1, further comprising an operating unit (32) for inputting format modification commands, wherein said control means (31) modifies the format of said superimposition signal in accordance with said format modification commands.

3. An apparatus (100A) according to claim 2, wherein said superimposition signal comprises a signal of characters, symbols and graphics.

4. An apparatus (100A) according to claim 3, wherein said format modification commands include at least a command for changing the reproduced size of the superimposition.

5. An apparatus (100A) according to claim 3, wherein said format modification commands include at least a command for changing a position of the superimposition reproduced on the video image.

6. An apparatus (100A) according to claim 2, wherein said format modification commands includes at least a command for changing a font of the superimposition.

7. An apparatus (100A) according to claim 3, wherein said format modification commands includes at least a command for changing a colour tone of the superimposition.

8. An apparatus (100A) according to claim 1, wherein said information recording medium is a Compact Disk Video.

5

9. An apparatus (100A) according to claim 1, wherein said information recording medium is a Laser Disk.

10. An apparatus (100A) according to claim 1, wherein said information recording medium is a Digital Audio Tape.

11. An apparatus (100A) for reproducing a video image from an information recording medium on which an audio signal, a video signal and subcode information is recorded, said apparatus comprising:

a subcode decoder (23) for decoding said subcode information used for superimposition;
a character generator (47) for generating character information from said subcode information;
a video signal processor (48) for superimposing said modified character information on said video signal; and
a display (33) for displaying said video signal with the superimposed character information; characterised in that:
the character generator is arranged to modify the format of said character information in accordance with a modification command.

12. An apparatus (100A) according to claim 11, further comprising an audio decoder (24) for decoding said audio signal.

13. An apparatus (100A) according to claim 11, wherein said modified character information comprises at least information modified in one of character size, character display position and symbol format.

14. An apparatus (100A) according to claim 11, wherein said subcode information comprises coordinates information for displaying characters, font information and color information of characters.


**Patentansprüche**

1. Vorrichtung (100A) zum Wiedergeben eines Videobildes, das eine Überlagerung von einem Informations-Aufzeichnungsmedium enthält, an welchem kodierte Videoinformation und Hilfskode-Information mit einer hilfskodierten Überlagerungsinformation aufgezeichnet ist, welche Vorrichtung umfaßt:

Videoinformations-Wiedergabemittel (400) zum Dekodieren der Videoinformation, um ein Videosignal auszugeben; und
Hilfskodeinformation-Wiedergabemittel (23) zum Dekodieren der Hilfskodeinformation, um ein Überlagerungssignal auszugeben; **gekennzeichnet durch**:
Steuermittel (31) zum Modifizieren des Formates des über das Videosignal zu überlagernden Überlagerungssignals.

2. Vorrichtung (100A) nach Anspruch 1, die weiter umfaßt eine Betätigungseinheit (32) zum Eingeben von Formatmodifizierungs-Befehlen, wobei das Steuermittel (31) das Format des Überlagerungssignals entsprechend den Formatmodifizierungs-Befehlen modifiziert.

3. Vorrichtung (100A) nach Anspruch 2, bei der das Überlagerungssignal ein Signal von Zeichen, Symbolen und Graphiken umfaßt.

4. Vorrichtung (100A) nach Anspruch 3, bei der die Formatmodifizierungs-Befehle mindestens einen Befehl zum Ändern der Wiedergabegröße der Überlagerung enthalten.

5. Vorrichtung (100A) nach Anspruch 3, bei der die Formatmodifizierungs-Befehle mindestens einen Befehl zum Ändern einer Position der an dem Videoabbild wiedergegebenen Überlagerung enthalten.

6. Vorrichtung (100A) nach Anspruch 2, bei der die Formatmodifizierungs-Befehle mindestens einen Befehl zum Ändern einer Zeichenart der Überlagerung enthalten.

7. Vorrichtung (100A) nach Anspruch 3, bei der die Formatmodifizierungs-Befehle mindestens einen Befehl zum Ändern eines Farbtons der Überlagerung enthalten.

8. Vorrichtung (100A) nach Anspruch 1, bei der das Informationsaufzeichnungsmedium eine Video-Kompaktplatte ist.

9. Vorrichtung (100A) nach Anspruch 1, bei der das Informationsaufzeichnungsmedium eine Laserplatte ist.

10. Vorrichtung (100A) nach Anspruch 1, bei der das Informationsaufzeichnungsmedium ein digitales Audioband ist.

11. Vorrichtung (100A) zum Wiedergeben eines Videobildes von einem Informationsaufzeichnungsmedium, an welchem ein Audiosignal, ein Videosignal und Hilfskodeinformation aufgezeichnet ist, welche Vorrichtung umfaßt:

einen Hilfskode-Dekodierer (23) zum Dekodieren der für die Überlagerung benutzten Hilfskodeinformation;
einen Zeichengenerator (47) zum Erzeugen von Zeicheninformation aus der Hilfskodeinformation;
einen Videosignalprozessor (48) zum Überlagern der modifizierten Zeicheninformation über das Videosignal; und
eine Anzeige (33) zum Anzeigen des Videosignals mit der überlagerten Zeicheninformation; dadurch **gekennzeichnet,** daß:
der Zeichengenerator zum Modifizieren des Formates der Zeicheninformation gemäß einem Modifizierungsbefehl ausgelegt ist.

12. Vorrichtung (100A) nach Anspruch 11, die weiter einen Audio-Dekodierer (24) zum Dekodieren des Audiosignals umfaßt.

13. Vorrichtung (100A) nach Anspruch 11, bei der die modifizierte Zeicheninformation mindestens in Hinblick auf eine der Eigenschaften Zeichengröße, Zeichenanzeigeposition und Symbolformat modifizierte Information umfaßt.

14. Vorrichtung (100A) nach Anspruch 11, bei der die Hilfskodeinformation Koordinateninformation zum Anzeigen von Zeichen, Zeichenartinformation und Farbinformation von Zeichen umfaßt.

**Revendications**

1. Appareil (100A) pour reproduire une image vidéo comportant une superposition à partir d'un support d'enregistrement d'informations sur lequel des informations vidéo codées et des informations de sous-code ayant des informations de superposition sous-codées sont enregistrées, ledit appareil comprenant:

- des moyens de reproduction d'informations vidéo (400) pour décoder lesdites informations vidéo pour fournir un signal vidéo; et
- des moyens de reproduction d'informations de sous-code (23) pour décoder lesdites informations de sous-code pour fournir un signal de superposition,

caractérisé par:

- des moyens de commande (31) pour modifier le format dudit signal de superposition à superposer audit signal vidéo.

2. Appareil (100A) selon la revendication 1, comprenant en outre une unité de commande (32) pour entrer des commandes de modification de format, dans lequel lesdits moyens de commande (31) modifient le format dudit signal de superposition selon lesdites commandes de modification de format.

3. Appareil (100A) selon la revendication 2, dans lequel ledit signal de superposition comprend un signal de caractères, symboles et graphismes.

4. Appareil (100A) selon la revendication 3, dans lequel lesdites commandes de modification de format comprennent au moins une commande pour changer la taille reproduite de la superposition.

5. Appareil (100A) selon la revendication 3, dans lequel lesdites commandes de modification de format comprennent au moins une commande pour changer la position de la superposition reproduite sur l'image vidéo.

6. Appareil (100A) selon la revendication 2, dans lequel lesdites commandes de modification de format comprennent au moins une commande pour changer une police de la superposition.

**7.** Dispositif (100A) selon la revendication 3, dans lequel lesdites commandes de modification de format comprennent au moins une commande pour changer une teinte de la superposition.

**8.** Appareil (100A) selon la revendication 1, dans lequel ledit support d'enregistrement d'informations est un Compact Disk Video.

**9.** Appareil (100A) selon la revendication 1, dans lequel ledit support d'enregistrement d'informations est un Laser Disk.

**10.** Appareil (100A) selon la revendication 1, dans lequel ledit support d'enregistrement d'informations est une cassette DAT (Digital Audio Tape).

**11.** Appareil (100A) pour reproduire une image vidéo à partir d'un support d'enregistrement d'informations sur lequel un signal audio, un signal vidéo et des informations de sous-code sont enregistrés, ledit appareil comprenant:

- un décodeur de sous-code (23) pour décoder lesdites informations de sous-code utilisées pour la superposition;
- un générateur de caractères (47) pour produire des informations de caractères à partir desdites informations de sous-code;
- un processeur de signal vidéo pour superposer lesdites informations de caractères modifiées audit signal vidéo; et
- un dispositif d'affichage (33) pour afficher ledit signal vidéo avec lesdites informations de caractères superposées,

 caractérisé en ce que:

- le générateur de caractères est agencé pour modifier le format desdites informations de caractères selon une commande de modification.

**12.** Appareil (100A) selon la revendication 11, comprenant en outre un décodeur audio (24) pour décoder ledit signal audio.

**13.** Appareil (100A) selon la revendication 11, dans lequel lesdites informations de caractères modifiées comprennent au moins des informations modifiées dans une ou un des taille des caractères, position d'affichage des caractères et format des symboles.

**14.** Appareil (100A) selon la revendication 11, dans lequel lesdites informations de sous-code comprennent des informations de coordonnées pour afficher des caractères, des informations de police et des informations de couleur des caractères.

# F I G. 1

FIG. 2

EP 0 514 214 B1

# F I G. 3

F I G.4(A)

F I G.4(B)

F I G. 5(A)

F I G. 5(B)

# F I G. 6